# EUROPEAN PATENT APPLICATION

(11) **EP 2 037 347 A1**
(43) Date of publication of application: **18.03.2009**
(21) Application number: 08171944.5
(22) Date of filing: 23.12.2005
(51) Int. Cl.: G06F 1/16

(54) **User interface for electronic devices**

(30) Priority: 04.01.2005 US 641652 P; 23.12.2005 US 318147
(62) Divisional of application: 05855578.0
(71) Applicant: Empower Technologies, Inc., Redmond, WA 98052-3391 (US)
(72) Inventor: Leung, Paul, Vancouver British Columbia (CA); Ho, Kenneth, Vancouver British Columbia (CA); Chan, Ying-Chiu, Vancouver British Columbia (CA)
(74) Representative: Cordina, Kevin John

(57) **Abstract**

A system is disclosed including an electronic device having a case housing an operative portion, such as a sound system, CD Player, or the like. A bay is formed in the case and includes a communication channel interface electrically coupled to the operative portion. The system further includes a portable computer, such as a personal digital assistant (PDA). The portable computer is sized to fit within the bay having a communication channel thereof in data communication with the communication channel interface. The portable computer stores applications including one or more control applications programmed to generate control signals in response to user inputs. Applications may display an interface on a touch screen and receive user inputs therefrom. The control signals are transmitted to the operative portion which responds to the control signals by playing music, adjusting a volume level, and the like.

## Description

### FIELD OF THE INVENTION

This invention relates generally to electronic devices and, more specifically, to a new and improved user interface for electronic devices and methods of incorporating the same.

### BACKGROUND OF THE INVENTION

One of the constant challenges in this technological age is how to control the increasingly complex electronic devices used in everyday life. While different types of electronic devices have different levels of functionality and thus require different levels of interface complexity, many problems are fundamental to all such devices. For example, electronic devices such as audio equipment typically require incorporation of various controls accessible by users in order to direct the functionality of the audio equipment. These controls include buttons, knobs, toggles, dials, switches, or other user interface devices. These controls, in turn, allow the user to access equipment functionality such as select equipment mode (e.g., switching from CD player to radio), radio station tuning, alarm set-up, audio track play sequence, and recording.

As electronic devices have increased in sophistication, more and more functions are necessary to control these devices. This has necessarily required the integration of more controls into the devices. With an increase in the number of controls has come a frequent corresponding increase in the confusion experienced by device users as they struggle to learn, program, use and reprogram the controls to achieve the desired functionality of the devices. Users often experience difficulty in locating the buttons to control the desired functionality caused by too many or poorly labeled buttons. Often multiple controls must be activated in sequence or simultaneous to achieve desired functionality. Other controls are required to be continuously operated to maintain certain functionality. In general, it is also difficult to obtain user feedback on the operation of the controls and instruction manuals are often missing, incomplete or incomprehensible.

Accordingly, there is a need for an improved user interface for electronic devices and methods of incorporating the same that minimizes the number of controls required to achieve the desired functionality, improves the ease with which the controls can be programmed and in general makes the control system more user friendly, all while not sacrificing the scope of functionality required in modern electronic devices.

### SUMMARY OF THE INVENTION

A system according to the invention includes an electronic device having a case housing an operative portions, such as a sound system, CD Player, or the like. A bay is formed in the case and includes a communication channel interface electrically coupled to the operative portion. The system further includes a portable computer, such as a personal digital assistant (PDA). The portable computer is sized to fit within the bay having a communication channel thereof in data communication with the communication channel interface. The portable computer includes a processor and a memory for executing and storing applications, respectively. Applications stored by the portable computer include control applications programmed to generate control signals in response to user inputs. The control signals are transmitted to the operative portion which responds to the control signals by playing music, adjusting a volume level, and the like. A touch screen is provided displaying an interface to the control applications. A user provides inputs to the portable computer by means of the touch screen.

The portable computer may also store a media application programmed to interpret media data and to generate an output interpretable by the operative portion to generate at least one of audio, pictures, and video. The media data operated on by the media application may be stored in the portable computer or stored in external memory selectively placed in data communication with the portable computer.

The portable computer may store a scheduling application programmed to receive a schedule. The scheduling application interprets the schedule and invokes the control application to cause the operative portion to perform a function according to the schedule.

### BRIEF DESCRIPTION OF THE DRAWINGS

Preferred and alternative embodiments of the present invention are described in detail below with reference to the following drawings.

FIGURES 1A through 1C are perspective views of an electronic device having an interface, in accordance with an embodiment of the present invention;

FIGURE 2 is a schematic block diagram of a system including an interface and an electronic device, in accordance with an embodiment of the present invention;

FIGURE 3A through 3C are perspective views of an alternative embodiment of an electronic device having an interface, in accordance with an embodiment of the present invention;

FIGURES 4A through 4C are perspective views of an alternative embodiment of an electronic device having an interface, in accordance with an embodiment of the present invention;

FIGURES 5A through 5C are perspective views of an alternative embodiment of an electronic device having an interface, in accordance with an embodiment of the present invention;

FIGURES 6A through 6B are perspective views of an alternative embodiment of an electronic device having an interface, in accordance with an embodiment of the present invention;

FIGURES 7A and 7B are perspective views of an alternative embodiment of an electronic device having an interface, in accordance with an embodiment of the present invention;

FIGURES 8A through 8C are perspective views of an alternative embodiment of an electronic device having an interface, in accordance with an embodiment of the present invention;

FIGURES 9A through 9C are perspective views of furniture having embedded electronic devices having an interface, in accordance with an embodiment of the present invention;

FIGURE 10 is a perspective view of a house having various systems controlled by an interface, in accordance with an embodiment of the present invention;

FIGURE 11 is a perspective view of a wrist mounted sensor having a separate interface, in accordance with an embodiment of the present invention; and

FIGURE 12 is a perspective view of a pocket mounted sensor having a separate interface, in accordance with an embodiment of the invention.

### DETAILED DESCRIPTION OF THE PREFERRED EMBODIMENT

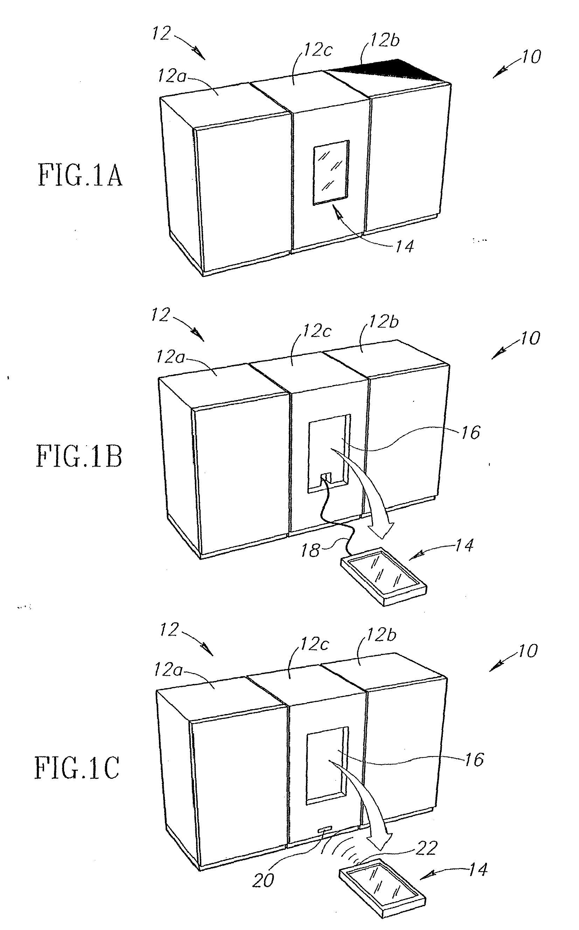

Referring to FIGURES 1A through 1C, an apparatus 10 includes a case 12 housing an electronic device such as a sound system, CD player, radio, alarm, cassette player, MP3 player, or the like. The electronic device may include other types of electronic systems that require a variety of controls, ranging from computer electronics to household appliances. The case 12 may be configured for desktop use, wall mounting, or portability, and may be configured to work with any combination of other mono, stereo or multi-channel equipment and speakers.

In some embodiments the case 12 comprises multiple portions such as portions 12a, 12b housing speakers and a portion 12c housing control and signal generating portions. An interface 14 secures to the case 12 and may be include a touch screen, combined screen and key pad, or the like. In the illustrated embodiment, the interface 14 is a portable digital assistant (PDA). In the embodiment of FIGURE 1B, the interface 14 removably secures within a bay 16 secured to, or formed in, the case 12. In some embodiments, a chord 18 extends from within the bay 16 and is connectible with the interface 14 to transmit signals. In still other embodiments, a socket or plug within the bay 16 engages a plug or socket, respectively, on the interface 14. In the embodiment of FIGURE 1C, a wireless communication port 20 secures to the case 12. The interface 14 likewise includes a communication port 22. The communication ports 20, 22 may be an infrared port, BlueTooth, 802.11 b, 802.11 g, or GPRS communication port, or the like. In some embodiments the interface 14 communicates with the communication port 20 while positioned within the bay 16, whereas in others, a socket or plug is provided for communication while the interface 14 is within the bay 16 and the communications port 20, 22 are used only when the interface 14 is removed from the bay 16.

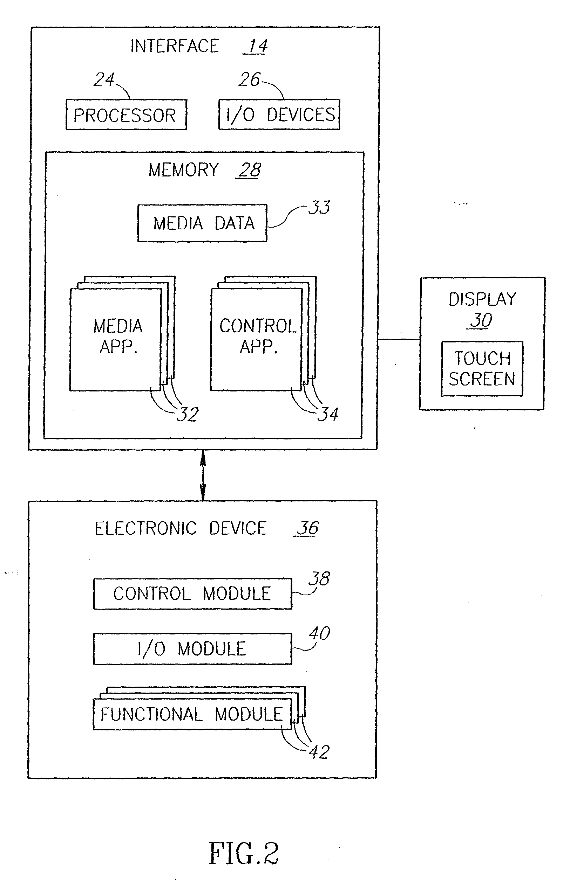

Referring to FIGURE 2, the interface 14 includes a processor 24, input/output devices 26, memory 28, and a display 30. The input/output devices 26 may include systems for communicating with other devices and for receiving user inputs. The devices 26 may include serial, parallel, USB, and Firewire ports as well as wireless communication devices. The devices 26 may also include a key pad and ,other buttons facilitating user interaction with the interface 14.

The memory 28 stores an operating system and a plurality of applications executable by the processor 24. The interface 14 may store applications such as a calculator, calendar, and electronic reference books such as dictionaries and encyclopedias. Applications may include media applications 32 programmed to interpret media data 33 stored in the memory 28, or in external memory made accessible to the media applications 32, and generate data convertible into audio and/or video signals provided to an electronic device 36. Media data 33 may include audio and video files in various formats. External memory may include memory cards, CDs, and the like. In some embodiments, media data 33 is stored and played on the electronic device 36 such that media applications 32 are not necessary.

The applications may also include control applications 34. Control applications 34 enable the interface 14 to generate control signals interpretable by the electronic device 36. Control applications 34 may generate a user interface on the display 30 and receive user inputs by means of the input/output devices 26. In one embodiment, the display 30 is a touch screen both displaying information and receiving user inputs. The control applications 34 translate the user inputs into control signals provided to the electronic device 36.

The control application 34 for a particular application may also store a user manual. Access to the user manual may vary based on a predetermined configuration or user preference. For example, the applicable portion of the user manual may be displayed on the touch screen as each control is pressed, describing the control functionality and programming options. Alternatively, the user manual may be interactive, and displayed only to notify the user that incorrect options were selected, and to give the user additional options. In another example, the user manual may be used to guide the user through a predetermined sequence of steps to setup or control either the user interface or associated electronic device.

The control applications 34 may be programmed to display only user interface elements, such as buttons, invoking functions that are currently a by the electronic device 36 being controlled, or selected for control. Thus, confusion that results from interfaces having too many small buttons is reduced. In some embodiments, the control applications 34 are programmed to display interface elements in a larger than normal size upon receiving an input from a user in order to accommodate users having limited eye sight.

The electronic device 36 typically includes a control module 38, an input/output module 40, and one or more functional modules 42. The control module 38 receives control signals from the interface 14 to control operation of the electronic device 36. Control signals may control such functions as activation, deactivation, volume control, CD track selection, input selection, and the like. In input/output module 40 handles communication with the input/output devices 26 of the interface 14. Functional modules 42 execute the functions dictated by the control signals. In embodiments where the electronic device 36 is a sound system the functional modules 42 are typically operable to produce music and perform related functions.

The memory 28 of the interface 14 may also store applications enabling networking to other computers, either locally or across the Internet. In such embodiments, the interface 14 would allow the user to view information associated with networked computers and other devices. The interface 14 would be able to download and upload data such as a daily schedule (e.g., to function as a sophisticated alarm clock to remind the user for multiple important events in any pattern), audio and video files (e.g., songs, music and video clips) and photographs and images (e.g., to be displayed as a screen saver or a slide show). The interface 14 may also connect via wired or wireless communication to the Internet to allow the user to surf the web and send/receive email.

The interface 14 may include a microphone, camera and/or video, and speaker capability that allows independent capture and playback or display of audio and video, as well as communication of captured audio and video to the electronic device 36 for presentation. For example, if the electronic device 36 is a stereo system, the interface 14 with a microphone could be used to record a voice memorandum that is communicated to the stereo system for broadcast using the stereo system speakers. Once captured, the audio or video could be stored, instantly replayed, cataloged for association with different users, and transmitted to other networked computers or on the Internet.

The interface 14 may independently or through the associated electronic device 36 be used to play video games. For example, the user may access and play video games through a touch screen user input device integrated with the interface 14 of the present invention. In this embodiment, a manipulation device (e.g., stylus), could be used to control game play. Alternatively, an external device such as a joystick could be connected to the interface 14 or electronic device via an input port such as a USB port.

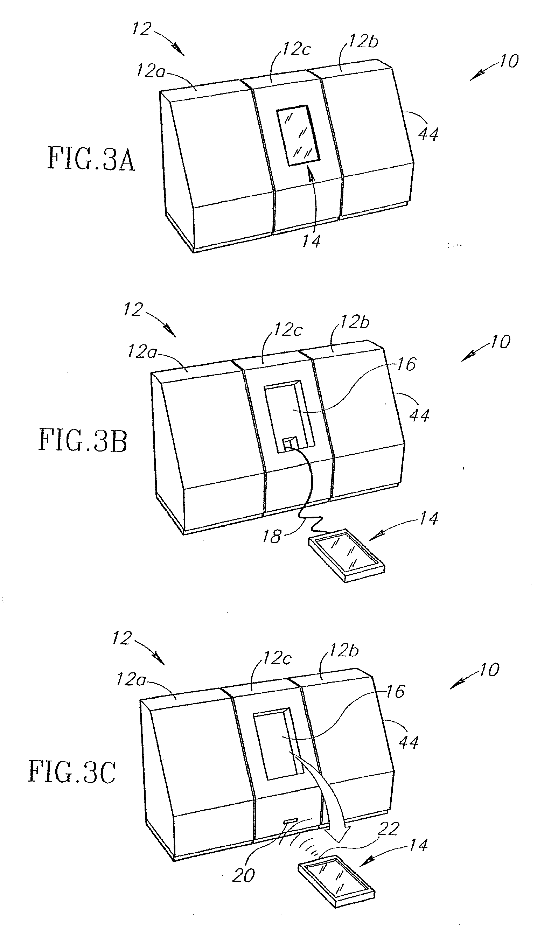

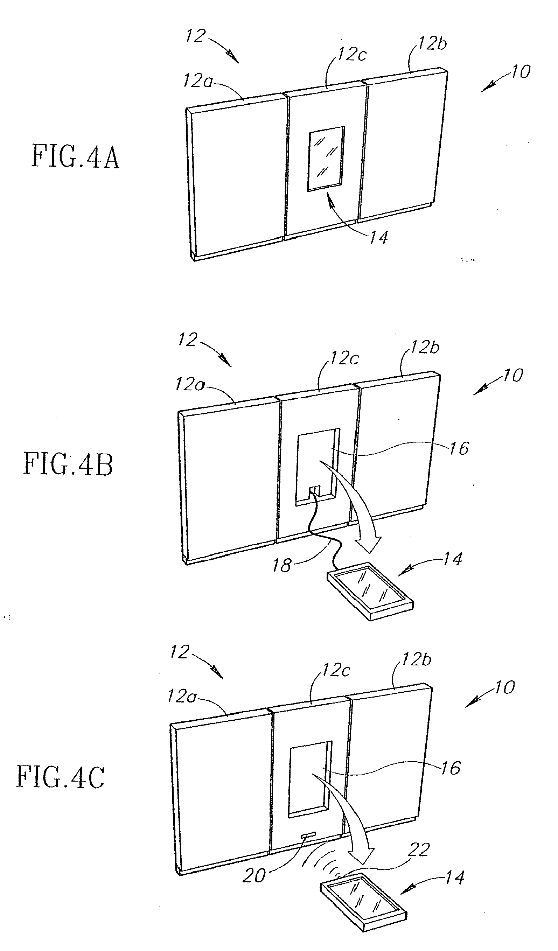

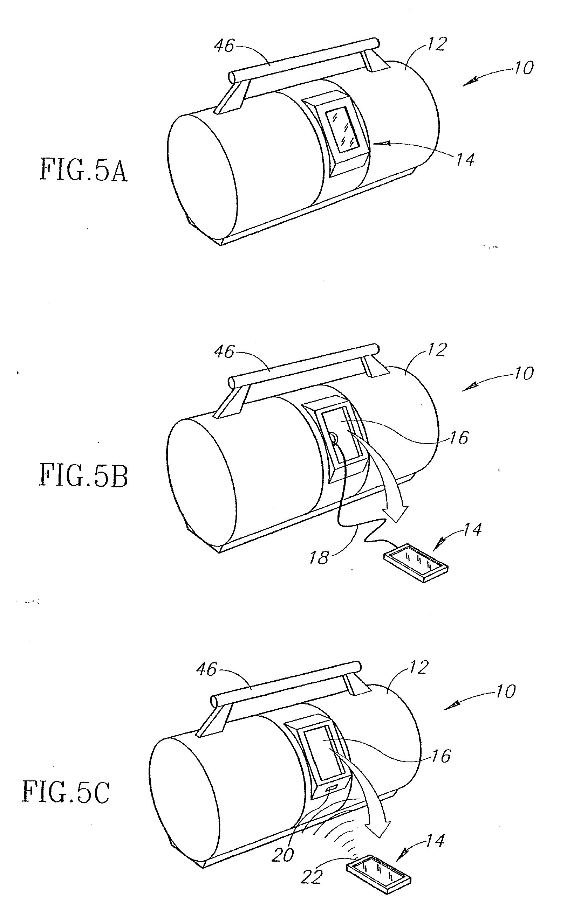

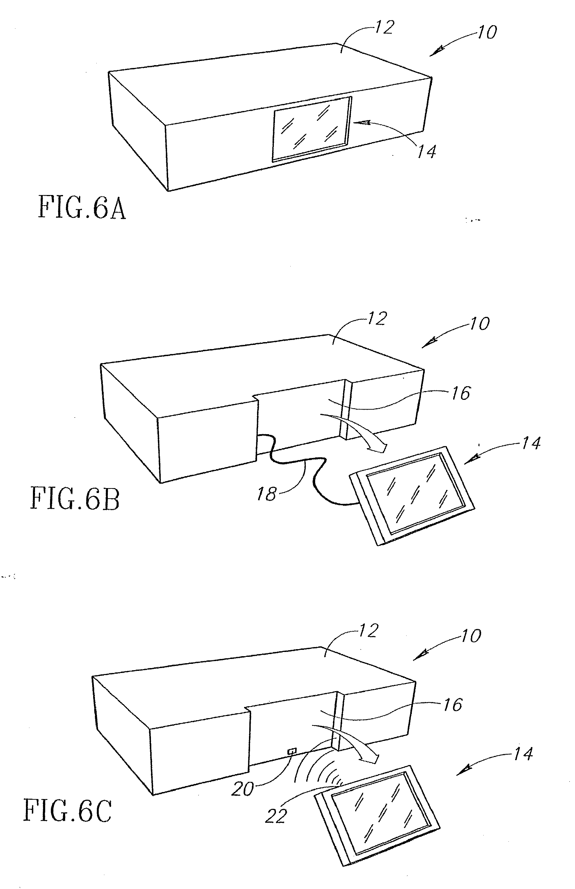

Referring to FIGURES 3A through 3C, the interface 14 may be positionable within a bay 16 formed on an angled surface 44 formed in the case 12. Referring to FIGURES 4A through 4C, in an alternative embodiment, the case 12 is substantially planar having a thickness much less than the height and width thereof. Referring to FIGURE 5A through 5C, in some embodiments the case 12 is adapted to be portable having a handle 46 and a round cross section. The bay 16 may be formed in a planar portion tangent to, or extending outwardly from, the remainder of the case 12. Referring to FIGURES 6A through 6C, in still other embodiments, the interface 14 secures to a bay 16 formed on an edge of a substantially planar case 12 having a height substantially less than the width and length thereof. In the embodiment of FIGURES 6A through 6C, the bay 16 may be embodied as a cutaway portion extending through the entire thickness of the case 12.

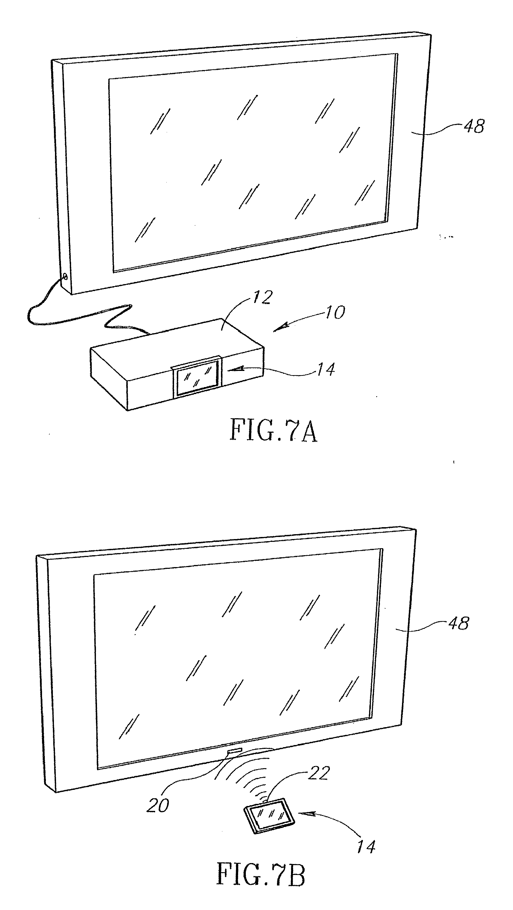

Referring to FIGURE 7A, the electronic device 36 may be embodied as a DVD player coupled to a television set 48. In the embodiment of FIGURE 7B, the electronic device 36 may be embodied as the television set 48 and the interface 14 may further include a DVD player, DVD recorder, or flash memory storing, media to be displayed on the television 48. The interface 14 wirelessly transmits the content of the DVD player or other memory device to the television 48 to be displayed. As in other embodiments, the interface 14 functions as a controller of the television set 48 permitting users to provide inputs by means of input/output devices 26 or a display 30 embodied as a touch screen. In such embodiments, media applications 32 may include DVD playing software, other video file playing software, video editing software, internet browsers and the like.

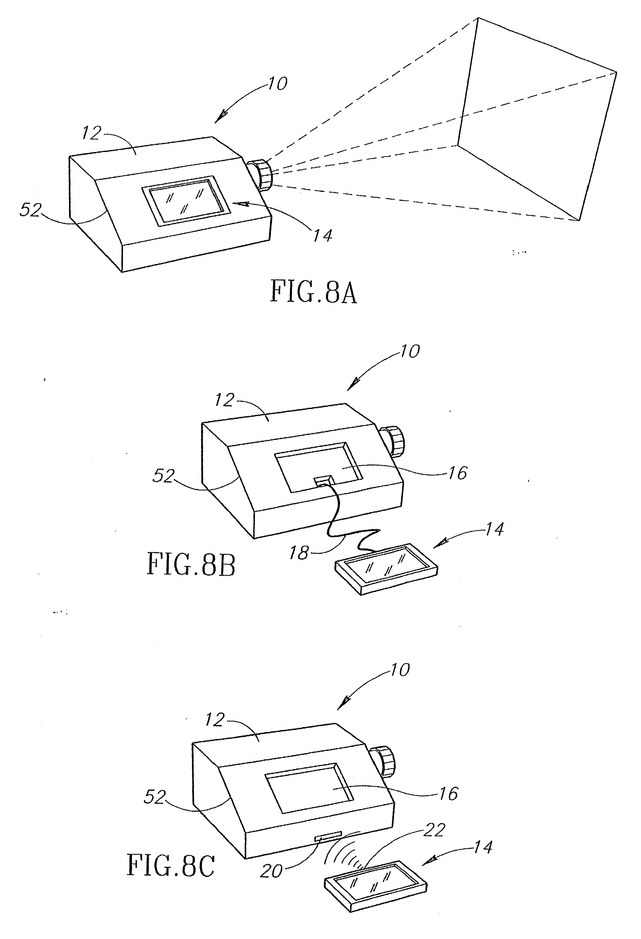

Referring to FIGURES 8A through 8C, the electronic device 36 may be embodied as a projector 50 having a case 12 with a bay 16 for receiving the interface 14. In the illustrated embodiment, the bay 16 is formed on a truncated corner 52 of the case 12. As in other embodiments, the interface 14 may provide both control signals and media content to the projector 50.

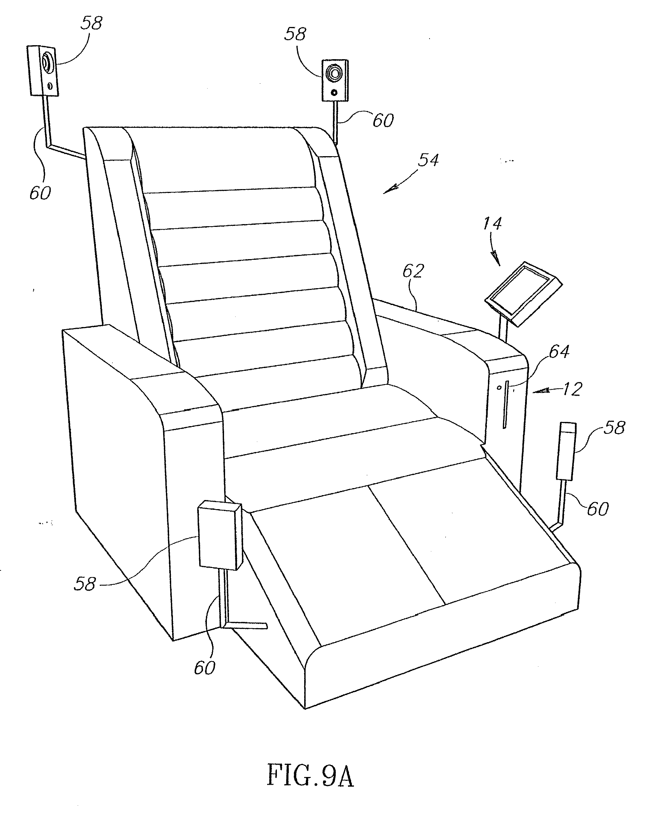

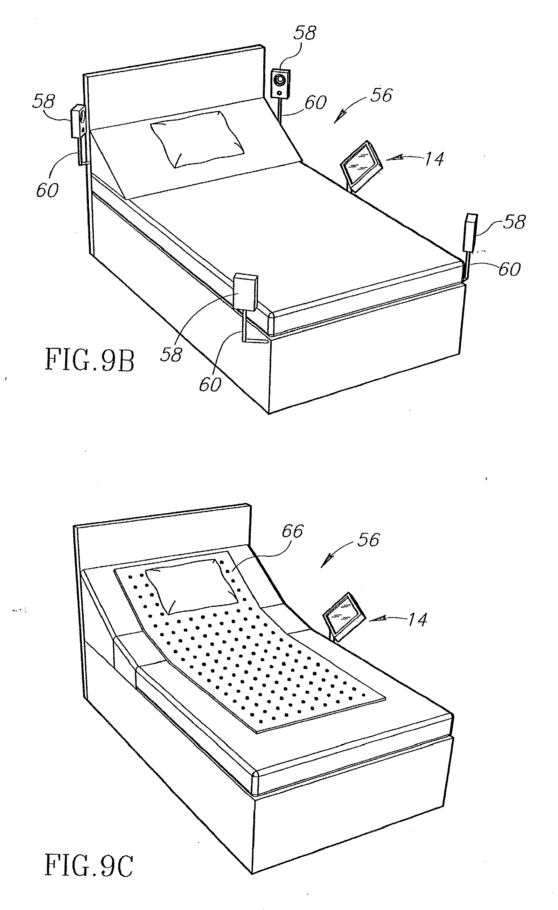

Referring to FIGURES 9A and 9B, the interface 14 may secure to a case 12 formed in, or secured to, a reclining chair 54 (FIGURE 9A) or bed 56 (FIGURE 9B) having a plurality of speakers 58 secured thereto, such as by means of arms 60 extending from the chair 54. The interface 14 may likewise secured to an arm 60 extending from the chair 54. The chair 54 may include an armrest 62 having a media player 64 embedded therein. The interface 14 may connect to the media player 64 wirelessly or by means of connecting wires extending therebetween. The chair 54 or bed 56 may have automatic massaging elements embedded therein having the controls thereof connected to the interface 14 such that the interface 14 may be used to initiate and terminate massages and change the parameters thereof. Referring to FIGURE 9C, in some embodiments a sensing mat 66 secures is laid on the bed 56 to measure vital signs. The sensing mat 66 is connected to the interface 14, by a cable or wirelessly, such that results may be stored and progress monitored. The mat 66 may sense blood pressure, heart rate, breathing rate, blood oxygen, temperature, body heat, motion (e.g. by means of radar, infrared, or video means), weight, carbon dioxide levels, moisture (e.g. sweat), sulphur dioxide, hydrogen sulphide or the like. Such measurements may enable medical professionals to discern , for example. whether a patient is sweating and the temperature of a room should be adjusted.

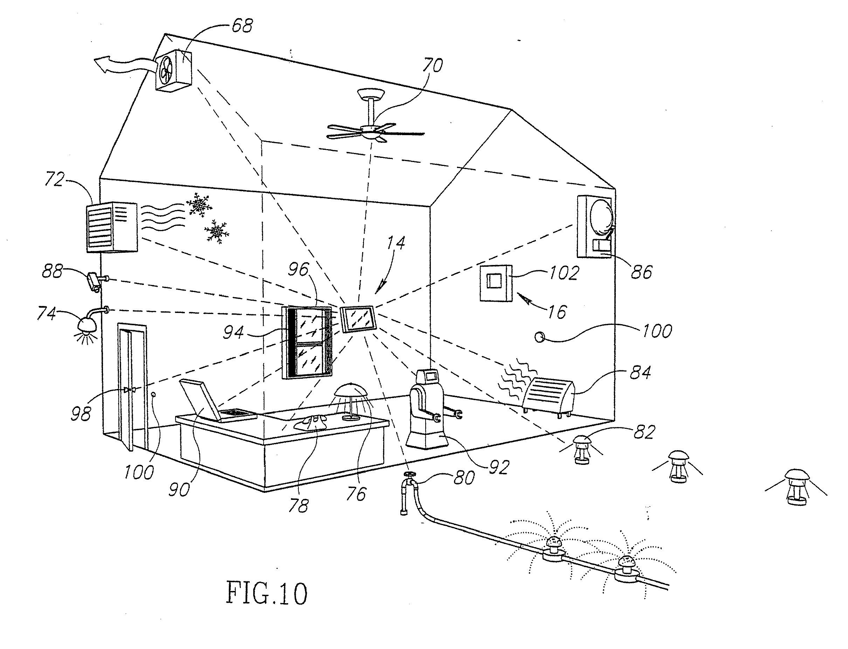

Referring to FIGURE 10, in some embodiments, the interface 14 hosts applications controlling devices in addition to audio-visual devices. For example, the interface 14 may control such items as exhaust fans 68, ceiling fans 70, air conditioners 72, exterior lighting 74, interior lighting 76, phone and answering systems 78, irrigation systems 80, decorative lighting 82, heating systems 84, alarm systems 86, surveillance systems 88, desktop or notebook computer systems 90, robots 92, motorized blinds 94, motorized windows 96, electric door locks 98, sensors 100, and the like.

The interface 14 connects to the enumerated devices wirelessly or through the bay 16 formed in the housing 102 secured to a wall or like structure. The bay 16 may be connected with the various devices such that positioning the interface 14 within the bay 16 places the interface in data communication with the various devices. The bay 16 may house a computer programmed to control the various devices such that data sent between the bay 16 and the interface 14 need not include low level commands to the devices.

The control applications 34 of the interface 14 may interact with the devices to perform different functions such as direct a camera 88 to view a designated area, transmit video from a camera 88 over the internet, activate the robot 92 to perform a function, open and close blinds 94, open and close windows 96, lock or unlock a door lock 98, contact police or the fire department, contact relatives, send messages over the internet, and the like.

In some embodiments, the sensors 100 are positioned inside or outside a building and provide inputs to the interface 14 wirelessly or through the bay 16. The sensors 94 may include motion sensors, air-pressure sensors, heat sensor (e.g. an infrared radiation sensor), temperature sensors, and the like. Applications executing on the interface 14 may process the outputs of the sensors 100 and enunciate alerts based thereon on the interface 14 and/or transmit alerts to other devices in order to provide notice to a third party such as a relative, the police department, a hospital, or a monitoring company.

In one example, the sensors 100 sense such events as a fire or heart attack. The application 34 interfacing with the sensors 100 may then cause the phone system 78. to phone emergency services. In some embodiments, a user may provide an input into the interface 14 causing the interface 14 to call emergency services. Upon sensing a heart attack or the like the interface 14 may be programmed to perform such things as open a window to allow in fresh air or adjust the temperature of the room. The interface 14 may direct the surveillance system 88 or a webcam to the location of a fire or a victim and send images or video to a third party. The interface 14 may also unlock the door lock 98 to permit emergency personnel to enter the building.

In the embodiment of FIGURE 10, the memory 28 of the interface 14 may host a scheduling application accessible by a user to schedule operation of the various devices connected to the interface 14. The scheduling application may be programmed to invoke applications corresponding to one or more of the devices in order to cause the devices to perform scheduled tasks. In some embodiments, the bay 16 hosts a computer executing a scheduling application that may be synchronized with the scheduling application of the interface 14. In some embodiments, the scheduling application reviews items in a calendar or schedule and schedules other tasks in response thereto. For example, a wake-up alarm may induce the scheduling application to turn on the heating system 84 around the same time as the alarm.

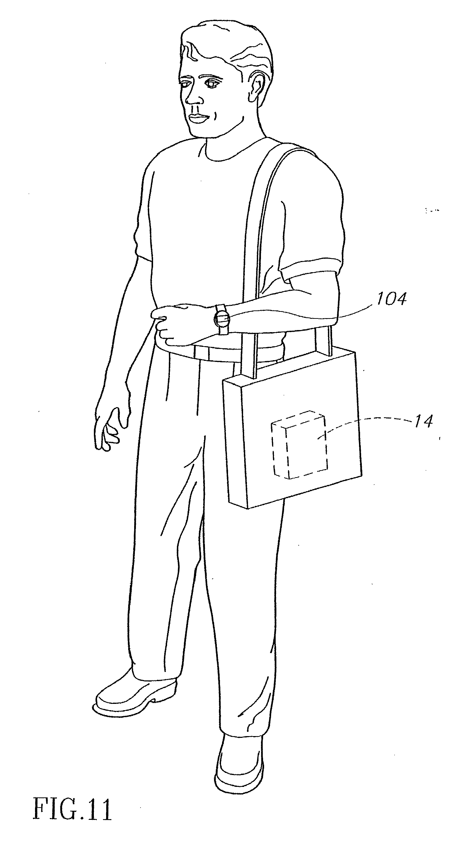

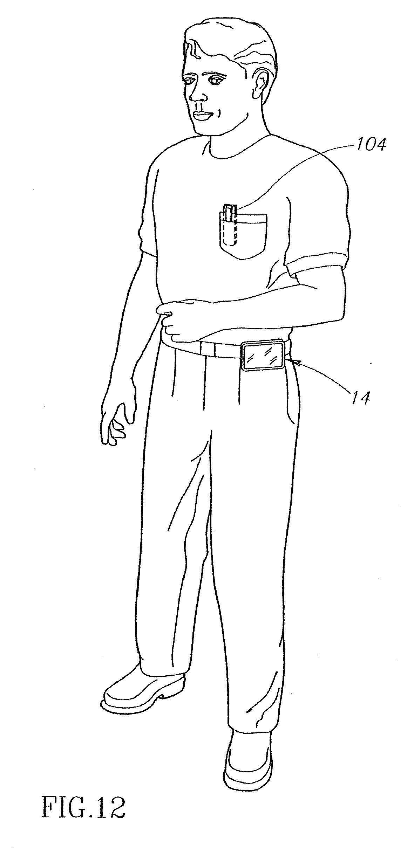

Referring to FIGURE 11, in one embodiment the interface 14 communicates with a wrist mounted sensor 104 sensing blood pressure, heart rate, blood oxygen, temperature, body heat, motion (e.g. by means of radar, infrared, or video means), weight or the like. The wrist mounted sensor 104 communicates this data to the interface 14, which may then forward the data wirelessly such as by cell phone networks or wireless Internet. The Interface 14 may also display the information on the display 30. Applications executing on the interface 14 may also analyze the data and provide audible, visible, or vibrational warnings in response thereto. Warnings may be displayed on or otherwise enunciated by the interface 14 and may be transmitted to another device to provide notice to a relative, the police department, a hospital, or a monitoring company. Referring to FIGURE 12, in an alternative embodiment, the sensor 104 clips to the shirt or other clothing of a user, similar to a pen or like device. The interface 14 may also include a clip such that it may be clipped to the belt or other clothing of a user. The sensor 104 may be embodied as a microphone transmitting the user's voice to an interface 14 embodied as a wireless phone. In such embodiments, the sensor 104 may include a speaker receiving audio signals from the interface 14. The speaker may likewise play music transmitted from the interface 14.

While the preferred embodiment of the invention has been illustrated and described, as noted above, many changes can be made without departing from the spirit and scope of the invention. Accordingly, the scope of the invention is not limited by the disclosure of the preferred embodiment. Instead, the invention should be determined entirely by reference to the claims that follow.

Further statements of the invention are set out in the following clauses:
1. An electronic system comprising:
   an electronic device comprising:
      a case housing an operative portion responsive to control signals and a transducer coupled to the operative portion to receive output signals therefrom and convert the output signals into a perceptible form;
      a communication channel interface electrically coupled to the operative portion; and
   a portable computer comprising:
      a processor for processing operational and executable data structures;
      a communication channel operably connected to the processor to carry information to and from the processor;
      an input device for receiving user inputs; and
      a memory for storing operational and executable data structures, the memory operably connected to the processor and storing a plurality of applications executable by the processor, at least one of the applications being a control application configured to generate control signals executable by the operative portion in response to the user inputs;
      the portable computer selectively positionable having the communication channel in data communication with the communication channel interface.
2. The electronic system of clause 1, wherein the memory further stores a media application, the media application configured to interpret media data to generate an output interpretable by the operative portion to generate at least one of audio, pictures, and video.
3. The electronic system of clause 2, wherein the memory stores media data readable by the media application.
4. The electronic system of clause 1, wherein the memory further stores a scheduling application programmed to store a schedule and invoke the control application according to the schedule.
5. The electronic system of clause 1, wherein the electronic device is a sound system.
6. The electronic system of clause 1, wherein the input device is a touch screen.
7. The electronic system of clause 1, wherein the communication channel is a wireless communication device.
8. The electronic system of clause 7, wherein the communication channel is an infrared communication device.
9. The electronic system of clause 1, wherein the case further comprises a bay having the communication channel interface proximate thereto, the portable electronic device positionable within the bay having the communication channel in data communication with the communication channel interface.
10. A method for controlling an electronic device, the method comprising:
   providing an electronic device comprising: a case housing an operative portion responsive to control signals and a transducer coupled to the operative portion to receive output signals therefrom and convert the output signals into a perceptible form, and a bay having communication channel interface electrically coupled to the operative portion;
   providing a portable computer comprising an input device for receiving user inputs, and a memory for storing operational and executable data structures, the memory operably connected to the processor and storing a plurality of applications executable by the processor, at least one of the applications being a control application configured to generate control signals executable by the operative portion in response to the user inputs;
   inserting the portable computer into the bay having the processor in data communication with the operative portion;
   receiving user inputs into the input device;
   generating control signals corresponding to the user inputs;
   transmitting the control signals to the operative portion; and
   executing at least one function corresponding to the control signals.
11. The method of clause 10, wherein the memory further stores a media application, the method further comprising executing the media application to interpret media data to generate an output interpretable by the operative portion to generate at least one of audio, pictures, and video; and transmitting the output to the operative portion.
12. The method of clause 9 wherein the memory stores media data readable by the media application.
13. The method of clause 10, wherein the memory further stores a scheduling application, the method further comprising generating a schedule and invoking the control application according to the schedule.
14. The method of clause 10, wherein the electronic device is a sound system.
15. The method of clause 10, wherein the input device is a touch screen.
16. The method of clause 10, wherein the communication channel is a wireless communication device.
17. The electronic system of clause 16, wherein the communication channel is an infrared communication device.
18. An electronic system comprising:
   a monitor comprising a sensor selectively contacting a user to sense a condition and a communication channel operable to transmit a sensor output from the sensor;
   a portable computer comprising:
      a processor for processing operational and executable data structures;
      an input port operably connected to the processor to carry information to and from the processor, the input port selectively in data communication with the communication channel;
      an input device for receiving user inputs; and
      a memory for storing operational and executable data structures, the memory operably connected to the processor and storing a plurality of applications executable by the processor, at least one of the applications being a monitoring application configured to receive the output and at least one of archive the output and generate an alert in response thereto;
      the portable computer selectively in data communication with the operative portion to receive the output thereof.
19. The electronic system of clause 18, wherein the sensor is a heart rate monitor.
20. The electronic system of clause 18, wherein the sensor is mounted in a wrist mounted device and wherein the communication channel comprises a wireless communication channel.
21. The electronic system of clause 18, wherein the sensor is mounted to a clip mountable to clothing and wherein the communication channel comprises a wireless communication channel.
22. The electronic system of clause 18, wherein the portable computer is a portable digital assistant.
23. The electronic system of clause 18, wherein the sensor is mounted in a mat overlaying a bed.

## Claims

1. An electronic system comprising:
a monitor comprising a sensor selectively contacting a user to sense a condition and a communication channel operable to transmit a sensor output from the sensor;
a portable computer comprising:
a processor for processing operational and executable data structures;
an input port operably connected to the processor to carry information to and from the processor, the input port selectively in data communication with the communication channel;
an input device for receiving user inputs; and
a memory for storing operational and executable data structures, the memory operably connected to the processor and storing a plurality of applications executable by the processor, at least one of the applications being a monitoring application configured to receive the output and at least one of archive the output and generate an alert in response thereto;
the portable computer selectively in data communication with the operative portion to receive the output thereof.

2. The electronic system of claim 1, wherein the sensor is a heart rate monitor.

3. The electronic system of claim 1, wherein the sensor is mounted in a wrist mounted device and wherein the communication channel comprises a wireless communications channel.

4. The electronic system of claim 1, wherein the sensor is mounted to a clip mountable to clothing and wherein the communications channel comprises a wireless Communications channel.

5. The electronic system of claim 1, wherein the portable computer is a portable digital assistant.

6. The electronic system of claim 1, wherein the sensor is mounted in a mat overlaying a bed.
